# EUROPEAN PATENT APPLICATION

(11) **EP 4 629 700 A1**
(43) Date of publication of application: **08.10.2025**
(21) Application number: 25160617.4
(22) Date of filing: 27.02.2025
(51) Int. Cl.: H04W 48/02, H04W 60/04

(54) **A METHOD OF CONFIGURING RADIO ACCESS TECHNOLOGY UTILIZATION OF A USER EQUIPMENT FOR REGISTERING WITH A MOBILE NETWORK, A USER EQUIPMENT, A SERVER AND A COMPUTER PROGRAM**

(30) Priority: 02.04.2024 GB 202404671
(71) Applicant: Vodafone Group Services Limited, Newbury RG14 2FN (GB)
(72) Inventor: KULAKOV, Alexey, London, W2 6BY (GB); LU, Yang, London, W2 6BY (GB); WILD, Peter, London, W2 6BY (GB); BROSZEIT, Marco, London, W2 6BY (GB); WITTENBERG, Frank, London, W2 6BY (GB)
(74) Representative: Boult Wade Tennant LLP

(57) **Abstract**

A method of configuring Radio Access Technology, RAT, utilization of a User Equipment, UE, for registering with a mobile network is provided. The method comprises communicating, from a core network entity to a UE, an indication comprising one or more RATs restricted for the UE, wherein receipt of the indication causes the UE to suppress registration attempts on the one or more restricted RATs, while the indication is in force.

## Description

### Field of the invention

The present invention relates to configuring Radio Access Technology, RAT, utilization in a mobile network. In particular, the invention relates to restricting a UE from registering with particular RATs during cell selection and/or reselection processes.

### Glossary

RAT - Radio Access Technology
TS - Technical Specifications
PLMN - Public Land Mobile Network
SST - Slice/Service Type
NAS - Non-Access Stratum
AS - Access Stratum
SIM - Subscriber Identity Module
SNPN - Stand-alone Non-Public Network
CAG - Closed Access Group
NSAG - Network Slice AS Group
EPS - Evolved Packet System
5GS - 5G System
SA - Stand-Alone
NG-RAN - Next Generation Radio Access Network
MME - Mobility Management Entity
TAI - Tracking Area Identity
IE - Information Element
RAN - Radio Access Network
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications (2G)
GSMA - GSM Association
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System (3G)
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Most mobile networks ("cellular networks") use a selection of different Radio Access Technologies (RATs) for communication with User Equipments (UEs). UEs may be permitted to connect to the mobile network via any of the available RATs and the UE may select a RAT based on selection criteria (e.g., signal strength or connection speed). However, in some cases, it may be desired for a mobile network to restrict the RATs on which a UE is permitted to connect to a subset of the available RATs.

For example, some mobile networks offer a national roaming service, to allow customers of other mobile networks (in the same country) to use their network. To ensure continued service for their own customers, the mobile network offering national roaming may restrict national roamers to certain RATs. For example, the mobile network may permit national roamers to connect via 4G but not via 5G. Roaming agreements between the mobile networks may stipulate which RATs are allowed and which RATs are restricted. National roamers who are customers of one mobile network may be permitted to register with the other mobile network via allowed RATs, but not via restricted RATs.

If a UE attempts to register on a RAT that is restricted by the mobile network. The network may determine that the RAT is restricted for the UE and send a reject message in response. Following the unsuccessful registration, the UE may subsequently register via allowed RAT.

However, unsuccessful registration attempts place a signalling burden on the network. Moreover, the time taken for the UE to register via a different RAT may be fairly long (up to 12 minutes in some cases).

Unrestricted usage of RATs can lead to technical challenges, inefficiencies of using network resources, and can potentially compromise service quality and thereby affect the user experience. Quantitative drive testing results have been presented, which delineate the duration of service outages reliant on using the current Non-Access Stratum (NAS) mechanism of the network sending registration reject messages containing a reject cause code to regulate the utilization of a NG-RAN. Additionally, other drawbacks may include increased signalling loads in 5GS networks and security concerns arising from the possibility of sending reject messages without integrity protection.

Service requirements do exist that enable a network operator to regulate the utilization of particular access technology combinations within a PLMN.

Clause 5.2.1 of 3GPP TS 38.304 describes that "The NAS can control the RAT(s) in which the cell selection should be performed, for instance by indicating RAT(s) associated with the selected PLMN, and by maintaining a list of forbidden registration area(s) and a list of equivalent PLMNs. The UE shall select a suitable cell based on RRC_IDLE or RRC_INACTIVE state measurements and cell selection criteria." Where 3GPP TS 38.304 describes that "the NAS can control the RAT(s) in which cell selection should be performed", this is referring to the NAS sending a reject message (such as a REGISTRATION REJECT message in 5G) in case a registration attempt is received on a forbidden RAT.

3GPP TS 38.304 relates to 5G. 3GPP TS 36.304 describes equivalent procedures in 4G.

The procedure for controlling RAT(s) during cell selection is further described in 3GPP TS 23.122, which describes in clause 3.1 that "in automatic PLMN selection the MS shall not consider PLMNs included in the "PLMNs with E-UTRAN not allowed" list as PLMN selection candidates for E-UTRAN access technology, unless no other PLMN is available. This does not prevent selection of such a PLMN if it is available in another RAT". This document describes that the UE may maintain a list of PLMNs with E-UTRAN not allowed, in response to receiving a reject message, such as a REGISTRATION REJECT message in 5G with cause #15, as specified in 3GPP TS 24.301.

In another prior art scenario, clause 6.3.2 of 3GPP TS 22.261 describes that "Based on operator policy, the 5G system shall support steering a UE to select certain 3GPP access network(s)." and "Based on operator policy, the 5G system shall be able to dynamically offload part of the traffic (e.g. from 3GPP RAT to non-3GPP access technology), taking into account traffic load and traffic type." These prior art methods exist to support load-balancing between RATs but do not configure restricted RATs for the UE.

In an alternative prior art scenario, allowed RATs may be configured in subscription data in a SIM of the UE. This is described in clause 6.19 of 3GPP TS 22.261, which recites that "The network operator can populate the Operator Controlled PLMN Selector list with associated access technology identifiers, stored in the 5G UE, with the PLMN/RAT combinations enabling access to the SSTs that are available to the 5G UE with associated subscription. The UE uses the list of PLMN/RAT combinations for PLMN selection, if available, typically during roaming situations."

This scenario is further described in Table 4.2-1 of 3GPP TS 38.304, which describes "a list of PLMNs in priority order according to TS 23.122 [9]. [...] For each PLMN, associated RAT(s) may be set." Clause 4.4.3 of TS 23.122 describes that "data files in the SIM include associated access technologies for each PLMN entry".

Clause 7.1 of 3GPP TS 22.011 describes that "it shall be possible to indicate per subscriber, in subscription data, allowed categories of Tracking/Location/Routing Areas. It shall be possible to use this subscription information to restrict subscribers' access to categories of Tracking/Location/Routing Areas in serving networks accordingly. As a minimum, at least one of the following categories shall be available: a) GERAN b) UTRAN c) E-UTRAN d) NG-RAN". The subscription data is provided on the SIM.

None of the available prior art provides a dynamic and efficient way for restricting RATs via which a UE may connect to the mobile network.

### Summary

A method of configuring Radio Access Technology, RAT, utilization of a User Equipment, UE, for registering with a mobile network is provided. The method comprises communicating, from a mobile network to a UE, an indication comprising one or more RATs restricted for the UE, wherein receipt of the indication causes the UE to suppress registration attempts on the one or more restricted RATs (or not even measure reference signals for restricted RATs), while the indication is in force.

The indication comprising one or more RATs restricted for the UE may be communicated from the UE to a core network entity of the mobile network.

The one or more RATs may be restricted for use by the UE across the entire mobile network or may be restricted in a specific portion of the mobile network.

In some example prior art methods, a UE attempts to register on a restricted RAT and the network sends a reject message in response. In this scenario, following the unsuccessful attempt by the UE to register on the restricted RAT, the UE may subsequently connect via an allowed RAT. In contrast, in the proposed methods, the core network entity proactively sends a list of restricted RATs to the UE, so that the UE does not attempt to register on restricted RATs. The proposed methods may therefore reduce incidences of UEs attempting to register on restricted RATs and therefore reduce unnecessary signalling in the network resulting from such unsuccessful registrations. The network efficiency may therefore be improved as a result of the proposed methods.

It should be noted that the signalling required to receive a registration attempt on a restricted RAT and to send a reject message in response requires significant resources. This is at least because the reject message comes from the core network and must be communicated to the UE via a Non-Access Stratum (NAS). In order to do so, the UE must be connected to the core network via the access network (on the restricted RAT) and therefore all the signalling required to establish this connection must be completed before the reject message can be sent to the UE. In particular, once connectivity is established between the UE and the access network (e.g., base station), a connection between the base station and the core network needs to be established in order to communicate the reject message from the NAS to the UE, which uses core network resources and radio access network resources.

In contrast, the proposed methods configure the restricted RATs in advance so that the UE does not attempt to register on the restricted RAT. This may therefore reduce the signalling required to communicate this restriction to the UE and improve network efficiency.

In prior art scenarios, once the UE receives a reject message, the UE may disable 5G for short time or look for other tracking areas. As a result, the UE may experience a period of downtime before it successfully connects with the mobile network via an allowed RAT. This period of downtime is often considerable and is typically in the range of 22 seconds to 12 minutes. This downtime is bad for user experience, as the UE is not registered with the network during this time. This downtime is also bad for the network, as the network is unable to contact the UE during this period. In contrast, the proposed methods configure the restricted RATs in advance so that the UE does not attempt to register on the restricted RAT. Instead, the UE may attempt to register on an allowed RAT and connect successfully, without experiencing the downtime associated with an unsuccessful registration attempt on a restricted RAT.

As previously described, in alternative prior art scenarios, allowed RATs may be configured in subscription data in a SIM of the UE in a static way (e.g., during an initial provisioning step). In contrast, the proposed methods are more flexible and allow an indication of restricted RATs to be communicated directly from a core network entity to the UE.

Advantageously, in the proposed methods, the indication of restricted RAT(s) is communicated to a particular UE. Therefore, the list of restricted RAT(s) may be different for different UEs. For example, national roamers may be restricted from one or more particular RAT(s), while normal subscribers may have access to those RAT(s). The proposed methods are therefore more flexible compared to some prior art solutions, in which particular RAT(s) may be restricted on a PLMN-wide basis.

The method may be used for configuring RAT utilization during cell selection and/or cell reselection. In other words, the same RAT(s) may be restricted for cell selection and cell reselection.

If the UE is already registered with the PLMN on an allowed RAT, the UE may be prevented from reselecting a restricted RAT by the network communicating the indication of restricted RAT(s) to the UE. In case the UE loses signal and subsequently initiates cell selection, the UE may have previously received the indication of restricted RAT(s) from the PLMN and may avoid the restricted RAT(s).

In the prior art scenario described above, where a reject message is sent to the UE, the UE only learns that the one specific RAT is restricted (the RAT on which the registration attempt was unsuccessful). If other RATs are also restricted, the UE may nevertheless attempt to register on those RATs, leading to further reject messages. In contrast, in some examples of the proposed methods, a list of restricted RATs may be communicated to the UE (the indication may comprise a plurality of restricted RATs). Therefore, the UE may be provided with additional information that may prevent unsuccessful registration attempts on other restricted RATs.

In some examples, the indication may further comprise a list of allowed RATs. The UE may only attempt to register on allowed RATs indicated by the mobile network. Therefore, the UE may not make any registration attempts on restricted RATs.

In other words, the indication may comprise a list of restricted one or more RATs on which the UE is not permitted to register and a list of one or more RATs on which the UE is permitted to register.

The one or more restricted RATs may be communicated to a specific UE. Therefore, the restrictions may be set on a per-UE basis, rather than PLMN-wide.

The core network entity may be a in a core network of the mobile network (which may also be referred to as a "telecommunications network").

The indication may further comprise one or more RATs allowed for the UE. In other words, the indication provides restricted and allowed RATs. By providing the UE with allowed RATs, registration attempts on restricted RATs may be reduced and network efficiency may be improved.

The indication may be communicated during a UE initiated mobile mobility specific procedure.

The indication may be communicated during one or more of the following UE initiated mobile mobility specific procedures:
an initial attach procedure
a tracking area update procedure
a registration request procedure.

. In 5G, a registration request procedure may be an initial registration (which may be analogous to the pre-5G attach procedure). Alternatively a registration request procedure in 5G may be a mobility and periodic registration (which may be analogous to the pre-5G tracking area update procedure).

In other words, the indication may be communicated during a session management procedure or a mobility management procedure.

The procedures described above provide specific examples in which the indication may be communicated during procedures relating to particular network technology. As described above, the indication may be communicated during an initial attach procedure or tracking area update procedure in a 4G LTE network or a registration request procedure or registration area update procedure in a 5G NR network. Likewise, the indication may be communicated during an attach procedure, location area update procedure or routing area update procedure in other network technologies. The indication may be communicated during an equivalent procedure in 6G and other network technologies. Whilst examples are provided in relation to the procedure for communicating the indication to a UE using a 4G LTE network, the method is not limited to 4G LTE networks.

In some specific examples, the indication may be communicated in an ATTACH ACCEPT message or a TRACKING AREA UPDATE ACCEPT message.

The indication may be communicated via a non-access stratum, NAS, functional layer between the UE and the core network.

The method may further comprise passing the indication from a NAS functional layer of the UE to an access stratum, AS, functional layer of the UE.

The UE may be composed of a number of functional layers. Such as an application layer, a NAS layer and a AS layer. The method may comprise receiving an indication of restricted RATs from the network via a NAS layer and passing the indication to the AS layer. In other words, the UE may communicate the preference between the NAS layer and the AS layer. The AS layer of the UE can therefore use the indication of restricted RATs to suppress registration attempts on restricted RATs. The choice of a particular RAT or cell during resection is AS layer functionality. However, since the indication of restricted RATs is coming from the NAS, the information may be passed between the layers.

The indication may be communicated with a security protected message. For example, the indication may be communicated with integrity protection and/or ciphering.

Security protection is described in more detail in 3GPP TS 24.301, which is incorporated by reference.

In contrast to prior art methods, the proposed methods may communicate the indication of one or more restricted RATs in an "ACCEPT" message from the core network to the UE (e.g., during a successful mobility specific procedure, such as an attach procedure or tracking area update procedure), rather than by rejection of a registration attempt. In this way, the indication is communicated in a message that is exchanged between the core network and the UE in any case. The unsuccessful registration attempt is therefore not required to communicate this information to the UE and the additional signalling burden on the network associated with the unsuccessful registration attempt and response may be avoided.

The indication may be in force until it is deleted or replaced by another indication of restricted RATs.

In one example, the indication may be deleted on receipt of a predetermined message, such as an ATTACH ACCEPT or TRACKING AREA UPDATE ACCEPT, that does not include an indication of restricted RATs.

In one example, the mobile network may update the list of one or more restricted RATs by sending a new indication of restricted RATs to replace the indication that was previously in force. The new indication may be received from the same network entity, or from a different network entity.

The new indication may comprise restricted and allowed RATs.

In another example, the mobile network may remove the restriction by sending the predetermined message without an indication of restricted RATs. Receipt of this message may cause the UE to delete the indication that was previously in force. This may be used when a mobile network removes a restriction on a RAT for a UE.

In another example, the UE may register in a different area where different RAT restrictions apply (or where no RAT restrictions apply). The UE may therefore receive a predetermined message that includes an updated indication of restricted RATs, or does not include an indication of restricted RATs at all. Receipt of this message may cause the UE to replace the indication that was previously in force with the new RAT restrictions. In the latter case, where the message does not include an indication of restricted RATs at all, the UE may be configured to delete the indication that was previously in force. As a result, the UE may be configured to utilize the RAT that was previously restricted.

In another example, the UE may register with a different mobile network that does not impose any restrictions on RATs (for example, if the UE returns from a national roaming network to a home network). The UE may therefore receive a predetermined message from the different mobile network that does not include an indication of restricted RATs. The UE may therefore delete the indication that was previously in force. As a result, the UE may be configured to utilize the RAT that was previously restricted.

The indication may comprise an expiration time and the indication may be in force until it expires.

The method may further comprise monitoring one or more reference signals corresponding to one or more cells operating via one or more RATs that are not restricted and evaluating cell selection and/or cell reselection criteria on the one or more reference signals. The method may further comprise suppressing monitoring of reference signals corresponding to cells operating via the one or more restricted RATs.

In some examples, the "one or more RATs that are not restricted" are the one or more "allowed RATs" included in the indication.

The method may further comprise storing the one or more RATs restricted for the UE on a Subscriber Identity Module, SIM, of the UE.

In some examples, the method may further comprise storing the one or more RATs allowed for the UE on the SIM.

The indication may be in force for the entire mobile network (e.g., PLMN).

Alternatively, the indication may further comprise one or more areas in which the indication is in force.

The one or more areas may comprise one or more of: one or more location areas, one or more routing areas, one or more cells, one or more tracking areas, one or more geographic areas, one or more registration areas, and one or more network areas.

Access to one or more RATs can be allowed/restricted based on location, which may be represented by a geographical location, tracking area, and the like. The location of the UE may be determined based on location information from a satellite navigation system, cell information received from a base station, use of a private network by the UE (e.g., if the private network is localised to a particular area), and the like.

The method may further comprise determining that the UE is located in one of the one or more areas in which the indication is in force.

In some examples, determining that the UE is located in one of the one or more areas in which the indication is in force may comprise using GPS coordinates from UE, using a tracking area, registration area, location area, routing area and/or cell ID received from a base station and/or using an identifier received from a network access point.

In some examples, use of a private network by the UE may be used to indicate an area.

The method may further comprise performing data analytics on the UE via a RAT on which the UE is registered. The method may further comprise identifying occurrence of an event from the data analytics, wherein the event causes the mobile network to restrict utilization of the RAT on which the UE is registered. The method may further comprise communicating, from the core network entity to the UE, an indication that the RAT on which the UE is registered is restricted for the UE.

In some examples, the method may comprise measuring data usage of the UE via the RAT on which the UE is registered, determining that the measured data usage of the UE indicates that utilization of the RAT should be restricted (e.g., because data usage via the RAT exceeds a threshold), and communicating an indication that the RAT is restricted for the UE.

Receipt of the indication that a particular RAT is restricted may cause the UE to suppress registration attempts on the particular RAT (or may cause the UE not to measure reference signals for the particular RAT at all), while the indication is in force.

The method may further comprise determining that the UE is a national roamer, wherein RAT restrictions apply to national roamers, and sending an indication of one or more restricted RATs in response to the determination.

If the UE attempts to register directly to a restricted RAT of the mobile network, the core network may send a reject message to the UE (for example, the core network may send a REGISTRATION REJECT message to the UE in 5G). For example, if the UE has not previously attached to the mobile network via an allowed RAT, it may not have received an indication of restricted RATs from the mobile network. Therefore, it may attempt to register via a restricted RAT.

A User Equipment, UE, configured to perform the methods described above is also provided.

A network entity or server (for example, a core network entity, such as a mobility management entity) configured to perform the methods described above is also provided.

A computer program comprising instructions that, when executed on a processor, cause the processor to perform the methods described above is also provided.

### Brief description of the drawings

The invention will be described with reference to the non-limiting examples illustrated in the following Figures.
Fig. 1 illustrates an example system.
Fig. 2 illustrates a flowchart of an example method.
Fig. 3 illustrates an example User Equipment.
Fig. 4 illustrates an example network entity.

### Detailed description

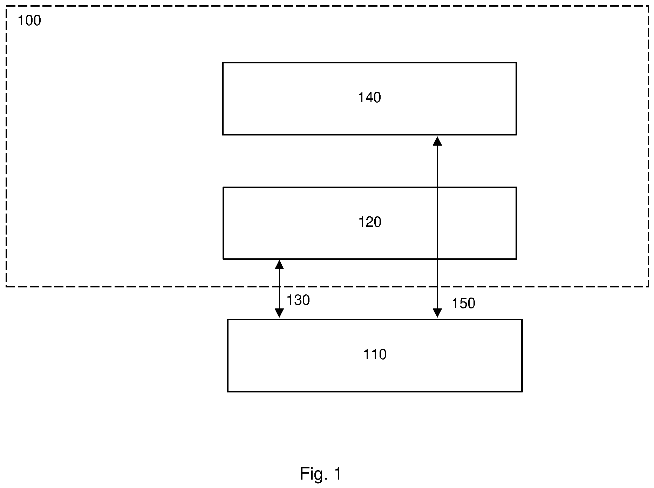

An example system is illustrated in Fig. 1. A mobile network 100 comprises an access network 120 and a core network 140. A UE 110 communicates with the access network via an Access Stratum (AS) 130. The UE 110 communicates with the core network 140 via a Non-Access Stratum (NAS) 150.

The UE 110 may connect to the mobile network 100 via a number of different Radio Access Technologies (RATs). There could be a number of reasons that a mobile network needs to restrict access via one or more RATs for a particular UE or group of UEs. In an example use case, PLMN#A and PLMN#B within the same country have entered into a roaming agreement enabling customers to utilize only 2G and 4G Radio Access Technology (RAT) during roaming country-wide.

A large number of roamers camping on the 5G network may be undesirable, because capacity in the 5G network may be limited. Therefore 5G may be excluded from the roaming agreement. Therefore, utilizing the 5G RAT may be restricted for UEs during roaming. In some examples, the 5G RAT may restricted nationwide or may be allowed only within specific geographical areas.

In order to implement such exclusions, existing standards provide a workaround. If a UE attempts to access the network on a restricted RAT, a REJECT message is sent from the core network.

Instead of depending on the network to passively send a reject cause code, as in prior art scenarios described above, the network can send an indication of restricted RAT(s) directly to the UE. For example, the list of restricted RATs may be included in the attach accept and/or tracking area update accept message(s) to the UE. This proactive approach may reduce the number of unnecessary UE registrations towards restricted RATs (e.g., 5GS in some examples).

Unnecessary UE registrations towards restricted RATs may cause subscribers (e.g., roaming subscribers in the example described above) to experience an extended period of downtime. This unnecessary downtime may be reduced by the proposed methods.

No input from GSMA is required, as the subscribers have the ability to roam between 4G networks and access the services seamlessly.

Service requirements do exist that enable a network operator to regulate the utilization of particular access technology combinations within a PLMN. For example, 3GPP TS 22.261, 3GPP TS 22.011, 3GPP TS 38.304, 3GPP TS 36.304 and 3GPP TS 23.122, as described above, which are all incorporated by reference.

When the inbound roamer/UE from PLMN#A (either already attached in the Evolved Packet System (EPS) of PLMN#B or not attached yet) selects and registers to the 5G SA of PLMN#B (according to the existing specifications), PLMN#B can send a reject message with a well-known reject cause code (for example, reject cause code #27 or #15 in a REGISTRATION REJECT message in 5G), to prevent the inbound roamer/UE from registering into its 5GS.

However, these methods do not prevent registration requests on restricted RATs and nevertheless place a burden on the network in handling these requests.

Due to the higher number of subscribers for national inbound roaming compared to international inbound roaming, the approach of relying on sending reject cause codes will lead to higher signalling loads on the 5GS RAT of the mobile network.

Therefore, an improved solution to prevent a UE from sending a 5G registration towards the NAS, without impacting the AS, is desired.

Moreover, during drive tests of the mobile network, it has been observed that relying on rejection of the registration request may lead to downtime for the UE. The tests showed that a UE attempting to access a restricted RAT (e.g., 5G SA) was out of service for at least 22s in most cases and can take up to 12 mins to regain 4G service in other cases.

Additionally, the reject message can be sent without integrity protection and is potentially open to misuse. For example, a malicious actor may set up a false network imitating a PLMN to induce the UE to attempt to register. The false network may then send a reject message to the UE (with no integrity protection) instructing the UE not to use the PLMN for an extended period of time (e.g., the next 24 hours). This could block legitimate UEs from accessing the legitimate PLMN (in a denial of service attack).

The proposed methods aim to improve existing behaviour so that UEs are configured to connect to the NAS via allowed RATs, without impacting the AS. The proposed methods may prevent instances of inbound roamers from sending registration request messages, and hence reduce the signalling storms that may occur in 5GS as a result of UEs attempting to connect to 5GS while making use of national roaming. Moreover, the proposed methods may help to prevent inbound roamers being out of service for long periods as a result of rejected registration attempts.

In the proposed methods, the Core network (which may in some examples be a 2G GPRS core, 4G EPS core, or 5GS core) sends the UE an indication of the restricted RATs (which may be in the form of a Prohibited RAT(s) IE). The indication may be sent upon the UE successfully attaching or registering with the corresponding 2G, 4G or 5G system (on an allowed RAT). For example, when the UE successfully attaches to the mobile network via a 4G RAT, the mobile network may indicate to the UE that the 5G RAT is restricted. Therefore, the UE may not attempt to connect to the mobile network via 5G (which would result in a scenario in which a reject message is sent, as described above).

Whilst certain specific examples have been described above in relation to the UE connecting via 4G and 5G being restricted, the proposed methods are not restricted to examples in which these particular technologies are allowed/restricted and may be used more widely. In other examples, the proposed methods may be used to restrict access via 6G.

Whilst some of the examples described above relate to national roaming, this is not the only possible scenario in which the proposed methods are applicable. For example, in other scenarios, the mobile network may restrict particular UEs from one or more particular RATs, in response to UE behaviour. The mobile network may measure energy usage for each UE. If a particular UE is using too much energy, the mobile network can restrict the UE from using the RAT.

In some examples, the mobile network may restrict a group of UEs, such as national roamers. In other examples, the mobile network may restrict one of the mobile network's own subscribers from a particular RAT (e.g., in response to UE behaviour, as discussed above).

In some examples, the UE may be restricted from accessing one or more particular RATs in all coverage areas (nationwide). In other examples, the restrictions may be geographically limited. For example, 5G may be restricted in urban areas but allowed in rural areas. In another example, UEs may be restricted from accessing the 5G network of another network provider via national roaming in areas where the user's home network has 5G coverage but may be allowed to access the 5G RAT of the other (national roaming) network in areas where the user's home network has no 5G coverage.

In yet another example, the areas in which a particular RAT is restricted may depend on energy consumption in the respective areas. The areas in which the RAT is restricted may be set dynamically.

3GPP TS 24.301 describes ATTACH ACCEPT and TRACKING AREA UPDATE ACCEPT messages, which may be modified in some example methods. A specific example of the proposed solution is described in detail below in the context of 3GPP TS 24.301. Material from this technical specification is included for background and to provide context for the invention. No claim is made to material comprised in the existing technical specification (3GPP TS 24.301 V18.6.0). Numbering from 3GPP TS 24.301 is retained for ease of reference. References to clauses relate to 3GPP TS 24.301, unless otherwise specified.

### 5.3.x Restriction on utilization of radio access technologies

In order to effectively use network resources, the network operator may regulate certain subscribers from accessing specific radio access technology (RAT) (see 3GPP TS 22.011 [1A]). For this purpose, the MME may transmit a list of restricted RAT(s) associated with the registered PLMN to the UE via the ATTACH ACCEPT message and TRACKING AREA UPDATE ACCEPT message (see clause 5.5.1.2 and clause 5.5.3.2). If any RAT(s) associated with the registered PLMN is restricted, the UE shall refrain from utilizing it for cell selection and cell reselection (3GPP TS 36.304 [21]) within the registered PLMN, if the applicability information within the restricted RAT(s) IE specifies that "restricted RAT(s) is applicable within the registered PLMN". Moreover, if the applicability information within the restricted RAT(s) IE specifies that "restricted RAT(s) is applicable to any tracking area within the TAI list of the registered PLMN", the UE refrain from utilizing the restricted RAT(s) for cell selection and cell reselection (3GPP TS 36.304) until the current TAI is not in the TAI list.

### 5.5.1.2.4 Attach accepted by the network

The MME may include a list of restricted RAT(s) associated with the registered PLMN in the ATTACH ACCEPT message. The UE shall store the list if provided by the network and replace the stored list on each receipt of the ATTACH ACCEPT message. If the ATTACH ACCEPT message does not contain a list, then the UE shall delete the stored list. The UE shall provide the stored list to the AS for cell selection and cell reselection according to 3GPP TS 36.304.

### 5.5.3.2.4 Normal and periodic tracking area updating procedure accepted by the network

The MME may include a list of restricted RAT(s) associated with the registered PLMN in the TRACKING AREA UPDATE ACCEPT message. The UE shall store the list as provided by the network and replace the stored list on each receipt of the TRACKING AREA UPDATE ACCEPT message. If the TRACKING AREA UPDATE ACCEPT message does not contain a list, then the UE shall delete the stored list. The UE shall provide the stored list to the AS for cell selection and cell reselection purposes according to 3GPP TS 36.304.

### 8.2.1.1 Message definition

This message is sent by the network to the UE to indicate that the corresponding attach request has been accepted. See table 8.2.1.1.

| | |
|---|---|
| Message type: | ATTACH ACCEPT |
| Significance: | dual |
| Direction: | network to UE |

**Table 8.2.1.1: ATTACH ACCEPT message content**

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 9.2 | | | |
| | Security header type | Security header type | M | V | 1/2 |
| | | 9.3.1 | | | |
| | Attach accept message identity | Message type | M | V | 1 |
| | | 9.8 | | | |
| | EPS attach result | EPS attach result | M | V | 1/2 |
| | | 9.9.3.10 | | | |
| | Spare half octet | Spare half octet | M | V | 1/2 |
| | | 9.9.2.9 | | | |
| | T3412 value | GPRS timer | M | V | 1 |
| | | 9.9.3.16 | | | |
| | TAI list | Tracking area identity list | M | LV | 7-97 |
| | | 9.9.3.33 | | | |
| | ESM message container | ESM message container | M | LV-E | 5-n |
| | | 9.9.3.15 | | | |
| 50 | GUTI | EPS mobile identity | O | TLV | 13 |
| | | 9.9.3.12 | | | |
| 13 | Location area identification | Location area identification | O | TV | 6 |
| | | 9.9.2.2 | | | |
| 23 | MS identity | Mobile identity | O | TLV | 7-10 |
| | | 9.9.2.3 | | | |
| 53 | EMM cause | EMM cause | O | TV | 2 |
| | | 9.9.3.9 | | | |
| 17 | T3402 value | GPRS timer | O | TV | 2 |
| | | 9.9.3.16 | | | |
| 59 | T3423 value | GPRS timer | O | TV | 2 |
| | | 9.9.3.16 | | | |
| 4A | Equivalent PLMNs | PLMN list | O | TLV | 5-47 |
| | | 9.9.2.8 | | | |
| 34 | Emergency number list | Emergency number list | O | TLV | 5-50 |
| | | 9.9.3.37 | | | |
| 64 | EPS network feature support | EPS network feature support | O | TLV | 3-4 |
| | | 9.9.3.12A | | | |
| F- | Additional update result | Additional update result | O | TV | 1 |
| | | 9.9.3.0A | | | |
| 5E | T3412 extended value | GPRS timer 3 | O | TLV | 3 |
| | | 9.9.3.16B | | | |
| 6A | T3324 value | GPRS timer 2 | O | TLV | 3 |
| | | 9.9.3.16A | | | |
| 6E | Extended DRX parameters | Extended DRX parameters | O | TLV | 3 |
| | | 9.9.3.46 | | | |
| 65 | DCN-ID | DCN-ID | O | TLV | 4 |
| | | 9.9.3.48 | | | |
| E- | SMS services status | SMS services status | O | TV | 1 |
| | | 9.9.3.4B | | | |
| D- | Non-3GPP NW provided policies | Non-3GPP NW provided policies | O | TV | 1 |
| | | 9.9.3.49 | | | |
| 6B | T3448 value | GPRS timer 2 | O | TLV | 3 |
| | | 9.9.3.16A | | | |
| C- | Network policy | Network policy | O | TV | 1 |
| | | 9.9.3.52 | | | |
| 6C | T3447 value | GPRS timer 3 | O | TLV | 3 |
| | | 9.9.3.16B | | | |
| 7A | Extended emergency number list | Extended emergency number list | O | TLV-E | 7-65538 |
| | | 9.9.3.37A | | | |
| 7C | Ciphering key data | Ciphering key data | O | TLV-E | 35-2291 |
| | | 9.9.3.56 | | | |
| 66 | UE radio capability ID | UE radio capability ID | O | TLV | 3-n |
| | | 9.9.3.60 | | | |
| B- | UE radio capability ID deletion indication | UE radio capability ID deletion indication | O | TV | 1 |
| | | 9.9.3.61 | | | |
| 35 | Negotiated WUS assistance information | WUS assistance information | O | TLV | 3-n |
| | | 9.9.3.62 | | | |
| 36 | Negotiated DRX parameter in NB-S1 mode | NB-S1 DRX parameter | O | TLV | 3 |
| | | 9.9.3.63 | | | |
| 38 | Negotiated IMSI offset | IMSI offset | O | TLV | 4 |
| | | 9.9.3.64 | | | |
| 1D | Restricted TAI(s) for the list of "restricted tracking areas for roaming" | Tracking area identity list | O | TLV | 8-98 |
| | | 9.9.3.33 | | | |
| 1E | Restricted TAI(s) for the list of "restricted tracking areas for regional provision of service" | Tracking area identity list | O | TLV | 8-98 |
| | | 9.9.3.33 | | | |
| XX | Restricted RAT(s) | Restricted RAT(s) | O | TLV | 4 |
| | | 9.9.3.3x | | | |

### 8.2.1.29 Restricted RAT(s)

This IE is included to indicate the restricted RAT(s) to be applied within the RPLMN.

### 8.2.26.1 Message definition

This message is sent by the network to the UE to provide the UE with EPS mobility management related data in response to a tracking area update request message. See table 8.2.26.1.

| | |
|---|---|
| Message type: | TRACKING AREA UPDATE ACCEPT |
| Significance: | dual |
| Direction: | network to UE |

**Table 8.2.26.1: TRACKING AREA UPDATE ACCEPT message content**

| IEI | **Information Element** | **Type/Reference** | **Presence** | **Forma t** | **Length** |
|---|---|---|---|---|---|
| | Protocol discriminator | Protocol discriminator | M | V | 1/2 |
| | | 9.2 | | | |
| | Security header type | Security header type | M | V | 1/2 |
| | | 9.3.1 | | | |
| | Tracking area update accept message identity | Message type | M | V | 1 |
| | | 9.8 | | | |
| | EPS update result | EPS update result | M | V | 1/2 |
| | | 9.9.3.13 | | | |
| | Spare half octet | Spare half octet | M | V | 1/2 |
| | | 9.9.2.9 | | | |
| 5A | T3412 value | GPRS timer | O | TV | 2 |
| | | 9.9.3.16 | | | |
| 50 | GUTI | EPS mobile identity | O | TLV | 13 |
| | | 9.9.3.12 | | | |
| 54 | TAI list | Tracking area identity list | O | TLV | 8-98 |
| | | 9.9.3.33 | | | |
| 57 | EPS bearer context status | EPS bearer context status | O | TLV | 4 |
| | | 9.9.2.1 | | | |
| 13 | Location area identification | Location area identification | O | TV | 6 |
| | | 9.9.2.2 | | | |
| 23 | MS identity | Mobile identity | O | TLV | 7-10 |
| | | 9.9.2.3 | | | |
| 53 | EMM cause | EMM cause | O | TV | 2 |
| | | 9.9.3.9 | | | |
| 17 | T3402 value | GPRS timer | O | TV | 2 |
| | | 9.9.3.16 | | | |
| 59 | T3423 value | GPRS timer | O | TV | 2 |
| | | 9.9.3.16 | | | |
| 4A | Equivalent PLMNs | PLMN list | O | TLV | 5-47 |
| | | 9.9.2.8 | | | |
| 34 | Emergency number list | Emergency number list | O | TLV | 5-50 |
| | | 9.9.3.37 | | | |
| 64 | EPS network feature support | EPS network feature support | O | TLV | 3-4 |
| | | 9.9.3.12A | | | |
| F- | Additional update result | Additional update result | O | TV | 1 |
| | | 9.9.3.0A | | | |
| 5E | T3412 extended value | GPRS timer 3 | O | TLV | 3 |
| | | 9.9.3.16B | | | |
| 6A | T3324 value | GPRS timer 2 | O | TLV | 3 |
| | | 9.9.3.16A | | | |
| 6E | Extended DRX parameters | Extended DRX parameters | O | TLV | 3 |
| | | 9.9.3.46 | | | |
| 68 | Header compression configuration status | Header compression configuration status | O | TLV | 4 |
| | | 9.9.4.27 | | | |
| 65 | DCN-ID | DCN-ID | O | TLV | 4 |
| | | 9.9.3.48 | | | |
| E- | SMS services status | SMS services status | O | TV | 1 |
| | | 9.9.3.4B | | | |
| D- | Non-3GPP NW policies | Non-3GPP NW provided policies | O | TV | 1 |
| | | 9.9.3.49 | | | |
| 6B | T3448 value | GPRS timer 2 | O | TLV | 3 |
| | | 9.9.3.16A | | | |
| C- | Network policy | Network policy | O | TV | 1 |
| | | 9.9.3.52 | | | |
| 6C | T3447 value | GPRS timer 3 | O | TLV | 3 |
| | | 9.9.3.16B | | | |
| 7A | Extended emergency number list | Extended emergency number list | O | TLV-E | 7-65538 |
| | | 9.9.3.37A | | | |
| 7C | Ciphering key data | Ciphering key data | O | TLV-E | 35-2291 |
| | | 9.9.3.56 | | | |
| 66 | UE radio capability ID | UE radio capability ID | O | TLV | 3-n |
| | | 9.9.3.60 | | | |
| B- | UE radio capability ID deletion indication | UE radio capability ID deletion indication | O | TV | 1 |
| | | 9.9.3.61 | | | |
| 35 | Negotiated WUS assistance information | WUS assistance information | O | TLV | 3-n |
| | | 9.9.3.62 | | | |
| 36 | Negotiated DRX parameter in NB-S1 mode | NB-S1 DRX parameter | O | TLV | 3 |
| | | 9.9.3.63 | | | |
| 38 | Negotiated IMSI offset | IMSI offset | O | TLV | 4 |
| | | 9.9.3.64 | | | |
| 37 | EPS additional request result | EPS additional request result | O | TLV | 3 |
| | | 9.9.3.67 | | | |
| 1D | Restricted TAI(s) for the list of "restricted tracking areas for roaming" | Tracking area identity list | O | TLV | 8-98 |
| | | 9.9.3.33 | | | |
| 1E | Restricted TAI(s) for the list of "restricted tracking areas for regional provision of service " | Tracking area identity list | O | TLV | 8-98 |
| | | 9.9.3.33 | | | |
| 39 | Maximum time offset | GPRS timer 3 | O | TLV | 3 |
| | | 9.9.3.16B | | | |
| XX | Restricted RAT(s) | Restricted RAT(s) | O | TLV | 4 |
| | | 9.9.3.3x | | | |

### 8.2.26.34 Restricted RAT(s)

This IE is included to indicate the restricted RAT(s) to be applied within the RPLMN.

### 9.9.3.3x Restricted RAT(s)

The purpose of the restricted RAT(s) information element is for the network to communicate a list of "restricted RAT(s)" to the UE.

The restricted RAT(s) information element is coded as shown below.

The restricted RAT(s) is a type 4 information element.

| | | | | | | | | |
|---|---|---|---|---|---|---|---|---|
| 8 | 7 | 6 | 5 | 4 | 3 | 2 | 1 | |
| Restricted RAT(s) IEI | | | | | | | | octet 1 |
| Length of restricted RAT(s) contents | | | | | | | | octet 2 |
| 0 Spare | 0 Spare | 0 Spare | 0 Spare | 0 Spare | 0 Spare | Applicability | | octet 3 |
| Satellite E-UTRAN in SB-S1 mode | Satellite E-UTRAN in WB-S1 mode | Satellite NG-RAN | NG-RAN | E-UTRAN in WB-S1 mode | E-UTRAN in NB-S1 mode | E-UTRAN | GERAN | octet 4 |

### 9.9.3.3x.1: Restricted RAT(s) information element

| Applicability (octet 3) | | |
|---|---|---|
| Bits | | |
| **2** | **1** | |
| 0 | 0 | Restricted RAT(s) is applicable within the registered PLMN |
| 0 | 1 | Restricted RAT(s) is applicable to any tracking area within the TAI list of the registered PLMN |

All other values are unused and shall be interpreted as "Restricted RAT(s) is applicable within the registered PLMN", if received by the UE.

Bits 3 to 8 of octet 3 are spare and shall all be coded as zero.

### GERAN (octet 4, bit 1)

### Bit

| | |
|---|---|
| **1** | |
| 0 | GERAN is not restricted |
| 1 | GERAN is restricted |

### E-UTRAN (octet 4, bit 2)

### Bit

| | |
|---|---|
| **2** | |
| 0 | E-UTRAN is not restricted |
| 1 | E-UTRAN is restricted |

### E-UTRAN in NB-S1 mode (octet 4, bit 3)

### Bit

| | |
|---|---|
| **3** | |
| 0 | E-UTRAN in NB-S1 mode is not restricted |

### E-UTRAN in WB-S1 mode (octet 4, bit 4)

### Bit

| | |
|---|---|
| **4** | |
| 0 | E-UTRAN in WB-S1 mode is not restricted |
| 1 | E-UTRAN in WB-S1 mode is restricted |

### NG-RAN (octet 4, bit 5)

### Bit

| | |
|---|---|
| **5** | |
| 0 | NG-RAN is not restricted |
| 1 | NG-RAN is restricted |

### Satellite NG-RAN (octet 4, bit 6)

### Bit

| | |
|---|---|
| **6** | |
| 0 | Satellite NG-RAN is not restricted |
| 1 | Satellite NG-RAN is restricted |

### Satellite E-UTRAN in WB-S1 mode (octet 4, bit 7)

### Bit

| | |
|---|---|
| **7** | |
| 0 | Satellite E-UTRAN in WB-S1 mode is not restricted |

### Satellite E-UTRAN in SB-S1 mode (octet 4, bit 8)

### Bit

| | |
|---|---|
| **8** | |
| 0 | Satellite E-UTRAN in SB-S1 mode is not restricted |

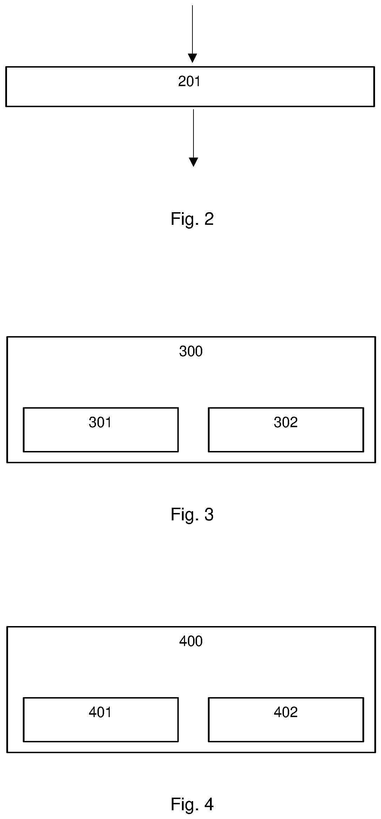

Fig. 2 illustrates an example method of configuring Radio Access Technology, RAT, utilization of a User Equipment, UE, for registering with a mobile network. The method comprises communicating 201, from a core network entity to a UE, an indication comprising one or more RATs restricted for the UE, wherein receipt of the indication causes the UE to suppress registration attempts on the one or more restricted RATs, while the indication is in force.

Fig. 3 illustrates a User Equipment 300, UE, configured to perform the methods described above. The UE 300 comprises a Non-Access Stratum 301, NAS, and an Access Stratum, 302.

Fig. 4 illustrates a network entity 400 (for example, a core network entity, such as a mobility management entity) configured to perform the methods described above. The network entity comprises a Non-Access Stratum 401, NAS, and an Access Stratum, 402.

Any of the methods described herein may be implemented as a computer program. The computer program may be configured to control a server (e.g., a network entity/node) and/or a UE to perform the methods described. A server (e.g., a network entity/node) of a mobile network and/or a UE may also be provided, configured to operate in accordance with the methods described. For example, the server may include a processor and at least one communication interface, particularly comprising one or both of a transmitter and receiver. A UE may also be provided, configured to operate in accordance with the methods described. The UE may likewise include a processor and at least one communication interface, particularly comprising one or both of a transmitter and receiver.

Although specific embodiments have been described, the skilled person will understand that various modifications and variations are possible. For example, whilst the disclosure is described in relation to existing network architecture and messages that are particular to existing network protocols, it will be understood that changes to the architecture, protocols and/or nomenclature are possible, but the proposed methods may still be applicable in this case. Also, combinations of any specific features shown with reference to one embodiment or with reference to multiple embodiments are also provided, even if that combination has not been explicitly detailed herein.

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

In the present invention, a node refers to a fixed point capable of transmitting/receiving a radio signal through communication with a UE. Various types of base stations (such as those described above) may be used as nodes, irrespective of the terms used. In other examples, a node may be a relay, a repeater, and the like.

In the present invention, a UE may be a fixed or mobile device. Examples of the UE include various devices that transmit and receive user data and/or various kinds of control information to and from a base station. The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a 4G/LTE network, these methods, techniques, apparatuses, and systems may be applied to a variety of wireless multiple access systems. Examples of multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP LTE. However, the technical features of the present invention are not limited thereto. For example, although the following detailed description is given based on a mobile communication system corresponding to a 3GPP LTE system, aspects of the present invention that are not specific to 3GPP LTE are applicable to other mobile communication systems. Moreover, the technical features of the present invention may be applied to future iterations of multiple access systems defined in 3GPP standards, such as (but not limited to) 5G/NR and 6G.

In the present disclosure, a cell refers to a geographical area to which one or more nodes provide a communication service. Accordingly, in the present disclosure, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer program are also provided. The computer program may comprise one or more instructions, or code, that, when executed by a computer, causes the methods described to be performed. A computer program may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a UE, a node, a network entity, a RAN entity, or a cell) means "one or more" (for instance one or more UE, one or more nodes, one or more network entities, one or more RAN entities, or one or more cells). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

## Claims

1. A method of configuring Radio Access Technology, RAT, utilization of a User Equipment, UE, for registering with a mobile network, the method comprising:
communicating, from a mobile network to a UE, an indication comprising one or more RATs restricted for the UE, wherein receipt of the indication causes the UE to suppress registration attempts on the one or more restricted RATs, while the indication is in force.

2. The method of claim 1, wherein the indication further comprises one or more RATs allowed for the UE.

3. The method of claim 1 or claim 2, wherein the indication is communicated during a UE initiated mobile mobility specific procedure, wherein the indication is communicated via a non-access stratum, NAS, functional layer between the UE and the core network.

4. The method of claim 3, further comprising:
passing the indication from a NAS functional layer of the UE to an access stratum, AS, functional layer of the UE.

5. The method of any preceding claim, wherein the indication is communicated with a security protected message.

6. The method of any preceding claim, wherein:
the indication is in force until it is deleted or replaced by another indication of restricted RATs; and/or
the indication comprises an expiration time and wherein the indication is in force until it expires.

7. The method of any preceding claim, further comprising:
monitoring one or more reference signals corresponding to one or more cells operating via one or more RATs that are not restricted and evaluating cell selection and/or cell reselection criteria on the one or more reference signals; and
suppressing monitoring of reference signals corresponding to cells operating via the one or more restricted RATs.

8. The method of any preceding claim, further comprising storing the one or more RATs restricted for the UE on a Subscriber Identity Module, SIM, of the UE.

9. The method of any preceding claim, wherein either:
the indication is in force for the entire mobile network; or
the indication further comprises one or more areas in which the indication is in force.

10. The method of claim 9, wherein the one or more areas comprise one or more of:
one or more location areas,
one or more routing areas,
one or more cells,
one or more tracking areas,
one or more geographic areas,
one or more registration areas, and
one or more network areas.

11. The method of claim 9 or claim 10, further comprising:
determining that the UE is located in one of the one or more areas in which the indication is in force.

12. The method of any preceding claim, further comprising:
performing data analytics on the UE via a RAT on which the UE is registered;
identifying occurrence of an event from the data analytics, wherein the event causes the mobile network to restrict utilization of the RAT on which the UE is registered; and
communicating, from the core network entity to the UE, an indication that the RAT on which the UE is registered is restricted for the UE.

13. A User Equipment, UE, configured to perform the method of any of claims 1 to 11.

14. A server configured to perform the method of any of claims 1 to 3, 5, 6, 9, 10, or 12.

15. A computer program comprising instructions that, when executed on a processor, cause the processor to perform the method of any of claims 1 to 12.
